# EUROPÄISCHE PATENTANMELDUNG

(11) **EP 1 097 631 A2**
(43) Veröffentlichungstag der Anmeldung: **09.05.2001**
(21) Anmeldenummer: 00123806.2
(22) Anmeldetag: 02.11.2000
(51) Int. Cl.: A01G 1/02, A01G 13/02

(54) **Abdeckfolie für Spargelfelder**

(30) Priorität: 06.11.1999 DE 19953368
(71) Anmelder: Orbita-Film GmbH, 06369 Weissandt-Gölzau (DE)
(72) Erfinder: Baumann, Hans-Joachim, Dr., 06366 Köthen (DE); Philipp, Hannes, Dr., 06188 Oppin (DE); Schröter, Irene, Dr., 06369 Dohndorf (DE)
(74) Vertreter: Schinke, Herbert, Dr. Dr., Patentanwaltskanzlei

(57) **Zusammenfassung**

Die Erfindung betrifft eine Abdeckfolie für Spargelfelder, wie sie zur Qualitätsverbesserung in der Landwirtschaft, insbesondere zum Abdecken von Spargeldämmen, benutzt wird.

Erfindungsgemäß sind das Abdeckfolien für Dämme der Spargelbeete, bei denen längsseitig die beiden Enden der Folie nach oben gefaltet und zum Teil durch Schweißnähte (4,5) fixiert werden, wodurch Taschen zur Aufnahme von Erde oder Sand gebildet werden, bei denen die einzelnen Schweißnähte (4,5) nicht aneinander stoßen, die Taschen einen Querschnitt in Form eines zweimal gleichschenkligen Sechsecks haben, wobei die schmalere obere Seite offen für die Aufnahme der Erde oder des Sandes bleibt.

Als Materialien können die für Abdeckfolie für Spargelfelder an sich bekannten Materialien zum Einsatz kommen, in der Folienstärke von üblicherweise 40 bis 250µm, schwarz, schwarz-weiß oder andersfarben eingefärbt, ggfs. auch transparent. Vorzugsweise werden Polyolefine eingesetzt.

## Beschreibung

Die Erfindung betrifft eine Abdeckfolie für Spargelfelder, wie sie zur Qualitätsverbesserung in der Landwirtschaft, insbesondere zum Abdecken von Spargeldämmen, benutzt wird.

Spargelfolien werden üblicherweise auf dem Spargeldamm aufgelegt und müssen randseitig beschwert werden, damit die Folien fest auf dem Damm aufliegen und nicht durch Wind verweht werden können.

Die randseitige Beschwerung kann durch Anhäufen von Erde erfolgen.

Das hat aber den Nachteil, daß vor dem Ernten die Erde vom Folienrand entfernt werden muß, dann der Spargel gestochen wird, danach die Folie wieder aufgelegt und durch Anhäufen mit Erde fixiert werden muß. Das ist sehr arbeits- und zeitintensiv.

Es sind Folien für Spargelfelder bekannt, bei welchen die Folie beidseitig einen Umschlag in Längsrichtung erhält, welcher mit der Folienbahn verschweißt wird. Durch den Umschlag werden beispielsweise Seile gezogen, die mittels Haken in der Erde verankert werden (DE 4222009).

Bei diesem System ist der Arbeitsaufwand beim Ernten des Spargels ebenfalls sehr hoch, und ein maschinelles Ernten ist aufgrund der Verankerung nicht möglich.

Bekannt sind auch Abdeckfolien, bei denen nach dem Folienumschlag bestimmte Taschenformen oder Röhren zur Aufnahme von Wasser gebildet werden (WO 98 300 82 und DE 29707670 U1).

Sie haben den Nachteil, daß nicht immer Wasser auf dem Feld verfügbar ist. Weiterhin gibt es Probleme mit der gleichmäßigen Befüllung der wasseraufnehmenden Taschen oder Röhren, wenn das Feld ein gewisses Gefälle oder Unebenheiten hat. Nachteilig sind ebenso Löcher in der Folie, die durch mechanische Beanspruchung im Gebrauch entstehen, z.B. beim Ernten oder auch Beschädigungen durch Tiere. Beim Ernten des Spargels (manuell oder maschinell) wird die Tasche bzw. Röhre bewegt, was ebenso zur Veränderung der Wasserverteilung in den Taschen oder Röhren führt. Die Beschwerung der Folie ist dadurch nicht mehr gesichert, und es muß stets Wasser nachgefüllt oder ganz neu gefüllt werden.

Deshalb sind auch Spargelfolien entwickelt worden, die mit Sand befüllte Taschen besitzen, die aber nicht entleerbar sind (DE 29720390 U1).

Ihre Nachteile zeigen sich sowohl beim Aufbringen auf den Spargeldamm, als auch beim Aufwickeln nach Gebrauch. Spargelfolien werden üblicherweise mehrere Jahre verwendet, und somit ist ein erhöhter Platzbedarf bei Lagerung nötig bzw. man hat erhöhte Entsorgungskosten am Ende der Nutzung. Ebenso ist das Auf- und Abwickeln der bereits mit gefüllten Taschen versehenen Folie problematisch.

Es sind verschiedene Folien mit Taschen zur zeitweisen Aufnahme von Sand oder Erdreich bekannt, bei denen die Taschen so konstruiert sind, daß das Erdreich oder der Sand nach Benutzung entleert werden kann (DE 29500393, DE 29618448 U1).

Nachteilig ist hier, daß die Taschen nur schlecht entleert werden können bzw. die Taschen so geschweißt sind, daß mechanische Schwachstellen an den Stellen vorhanden sind, die zum Ausreißen der Taschen führen können, wo die einzelnen Schweißnähte zusammentreffen.

Es bestand die Aufgabe, eine Abdeckfolie für Spargelfelder zu entwickeln, die die oben angeführten Nachteile beseitigt, d. h. eine Abdeckfolie, die Taschen zur zeitweisen Aufnahme von Füllgut wie Erde oder Sand besitzt, welche gut füllbar und entleerbar sind, mit der ein gutes maschinelles Ernten ermöglicht wird, wobei die

Folie leicht anhebbar und ablegbar ist, und die eine hervorragende mechanische Festigkeit der einzelnen ausgebildeten Taschen besitzt.

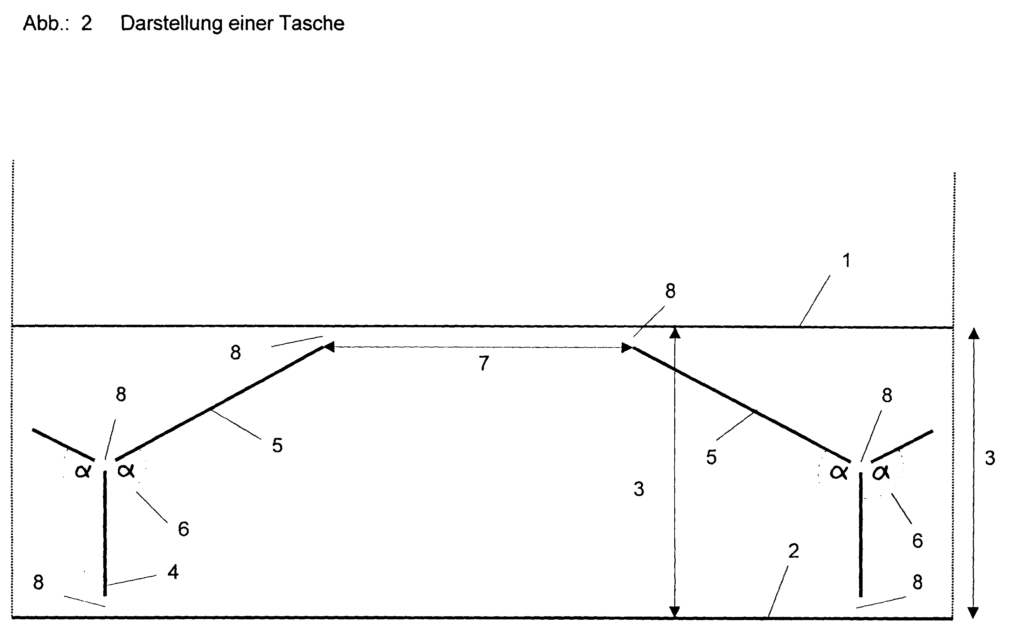

Diese Aufgabe wird erfindungsgemäß durch eine Abdeckfolie für Spargelfelder gelöst, die zur Auflage auf die Dämme der Spargelbeete bestimmt ist und aus Kunststofffolien, bei denen längsseitig die beiden Enden der Folie nach oben gefaltet und zum Teil durch Schweißnähte fixiert werden, wodurch Taschen zur Aufnahme von Erde oder Sand gebildet werden, besteht, bei der
- die einzelnen Schweißnähte (4, 5) nicht aneinander stoßen und nicht bis an die (unteren) Ränder (Folienkante 2) oder dem oberen Ende des Umschlags der Folie (1) reichen und der jeweilige Abstand (8) 1 bis 50 mm beträgt,
- die Schweißnähte vom unteren Teil (4) der Umschlagsbreite (3) nahezu senkrecht und im oberen Teil (5) dazu im Winkel (6) von 100 bis 150 ° zu dieser Senkrechten nach oben gehen,
- so daß Taschen mit einem Querschnitt in Form eines zweimal gleichschenkligen Sechsecks entstehen (Abb. 2),
- bei dem die 2 Schenkelpaare durch Schweißnähte (4, 5) fixiert und die breitere untere Seite durch die Faltung der Folie (2) verschlossen sind,
- während die schmalere obere Seite offen für die Aufnahme der Erde oder des Sandes bleibt (Füllöffnung 7) und eine Länge von 10 bis 40 cm hat.

Die Taschen sind so konstruiert, daß die Schweißnähte nicht aneinanderstoßen und nicht bis an die Ränder (Folienkante) und das obere Ende des Umschlags (Folienumschlag) reichen. Damit sind Schwachstellen ausgeschlossen, wie sie von Schweißnähten bekannt sind, bei denen sich Nähte berühren und wo das Material durch die thermische Belastung beim Verschweißen Dünnstellen erhält, die leicht zu Einrissen beim Befüllen der Taschen, Ernten des Spargels oder beim Entleeren der Taschen führen.

Zweckmäßig beträgt der Abstand der Schweißnähte zueinander und zu den (unteren) Rändern (Folienkante) oder dem oberen Ende des Umschlags der Folie 5 bis 15 mm.

Die Schweißnähte sind so ausgerichtet, daß die eine Schweißnaht senkrecht zur Folienkante ausgebildet wird und die andere Schweißnaht in einem stumpfen Winkel zur senkrechten Schweißnaht gesetzt wird.

Der Winkel zwischen den unten senkrechten und den schrägen oberen Schweißnähten beträgt vorzugsweise 120 bis 135 °C.

Diese Abschrägung hat sich als sehr vorteilhaft sowohl beim Füllen und Entleeren des Füllmaterials, als auch beim Zurückhalten des Füllmaterials in der Tasche während des Anhebens und Ablegens der Folie beim Erntevorgang des Spargels erwiesen.

Erfindungsgemäß stehen die Maße der Nähte zu den übrigen Parametern der Folie in einem bestimmten Verhältnis. So sollte die untere senkrechte Schweißnaht das 0,1 bis 0,8fache der Umschlagbreite ausmachen.

Die Länge der angewinkelten Schweißnaht ergibt sich aus der Länge der senkrechten Schweißnaht und dem Winkel zwischen beiden.

Durch diese Schweißnähte entstehen Taschen, deren obere Öffnung kleiner ist als der sonstige Querschnitt. Zweckmäßig ist, wenn die Füllöffnung eine Länge von 15 bis 20 cm hat.

Damit wird eine optimale Befüllung bzw. Entleerung der Taschen erreicht.

Als Materialien können die für Abdeckfolie für Spargelfelder an sich bekannten Materialien zum Einsatz kommen, in der Folienstärke von üblicherweise 40 bis 250 µm, schwarz, schwarz-weiß oder andersfarben eingefärbt, ggfs. auch transparent. Vorzugsweise werden Polyolefine (z. B. LDPE, LLDPE, Copolymere, m-PE) oder deren Gemische eingesetzt.

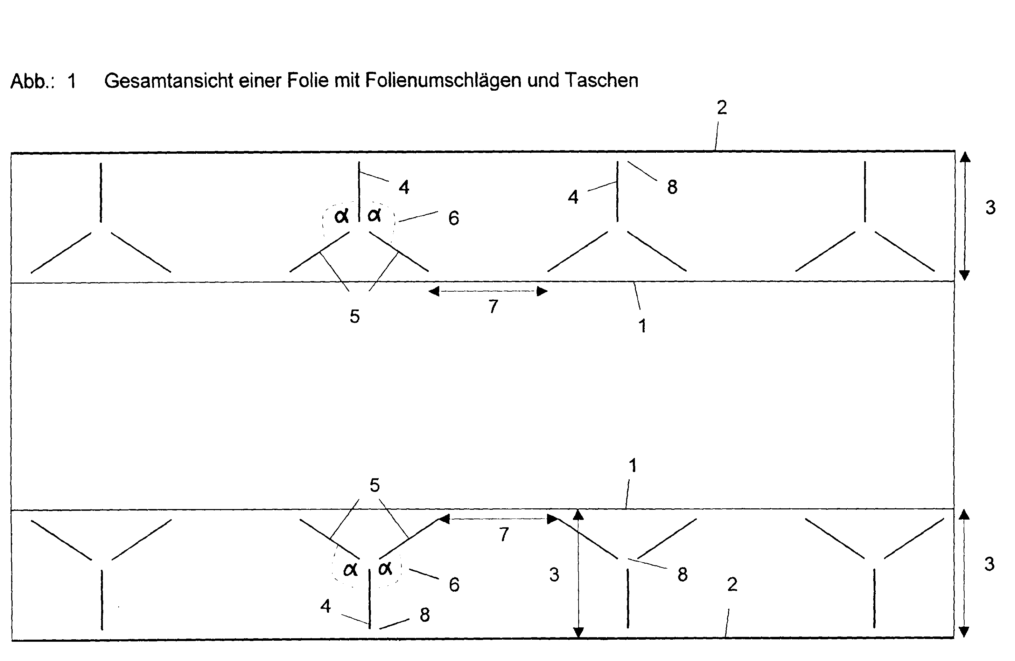

Die Abdeckfolie wird beispielhaft in den Abbildungen 1 und 2 dargestellt:
- Abb. 1:: Gesamtansicht einer Folie mit Folienumschlägen und Taschen
- Abb. 2:: Darstellung einer Tasche

Darin bedeuten
- 1: Folienumschlag (oberes Ende)
- 2: Folienkante
- 3: Umschlagbreite
- 4: Schweißnaht a (senkrecht)
- 5: Schweißnaht b (angewinkelt)
- 6: Winkel α zwischen den Schweißnähten
- 7: Füllöffnung
- 8: Abstand zwischen den einzelnen Schweißnähten

Die Abdeckfolie ist auf beiden Seiten umgeschlagen, unten ist die Folienkante (2), oben das obere Ende des Folienumschlags (1), (3) gibt die Folienbreite an.

Die Taschen sind so konstruiert, daß die Schweißnähte a (4) und b (5) nicht aneinanderstoßen und nicht bis an die Ränder (Folienkante (2) und Folienumschlag (1) reichen.

Der Abstand (8) zwischen den einzelnen Schweißnähten a (4) und b (5) und zwischen Schweißnaht und Folienkante (2) und Folienumschlag (1) liegt vorzugsweise zwischen 5 und 15 mm.

Die beiden Schweißnähte a (4) und b (5) sind so ausgerichtet, daß die Schweißnaht a (4) senkrecht zur Folienkante (2) ausgebildet wird und die Schweißnaht b (5) in einem Winkel α (6) zur Schweißnaht a (4) gesetzt wird, welcher vorzugsweise zwischen 120 bis 135 ° liegt.

Die Länge der Schweißnaht a (4) beträgt das 0,1 bis 0,8fache der Umschlagbreite (3).

Die Länge der Schweißnaht b (5) ergibt sich aus der Länge der Schweißnaht a (4) und dem Winkel α (6).

Die für die Aufnahme des Füllgutes vorgesehene Füllöffnung (7) der Tasche hat eine Öffnungsbreite von vorzugsweise 15 bis 20 cm.

## Patentansprüche

1. Abdeckfolie für Spargelfelder zur Auflage auf die Dämme der Spargelbeete, bestehend aus Kunststofffolien, bei denen längsseitig die beiden Enden der Folie nach oben gefaltet und zum Teil durch Schweißnähte fixiert werden, wodurch Taschen zur Aufnahme von Erde oder Sand gebildet werden, dadurch gekennzeichnet, daß
- die einzelnen Schweißnähte nicht aneinander stoßen und nicht bis an die (unteren) Ränder (Folienkante) oder dem oberen Ende des Umschlags der Folie reichen und der jeweilige Abstand 1 bis 50 mm beträgt,
- die Schweißnähte vom unteren Teil der Umschlagsbreite nahezu senkrecht und im oberen Teil dazu im Winkel von 100 bis 150 ° zu dieser Senkrechten nach oben gehen,
- so daß Taschen mit einem Querschnitt in Form eines zweimal gleichschenkligen Sechsecks entstehen,
- bei dem die 2 Schenkelpaare durch Schweißnähte und die breitere untere Seite durch die Faltung der Folie fast verschlossen sind,
- während die schmalere obere Seite offen für die Aufnahme der Erde oder des Sandes bleibt (Füllöffnung) und eine Länge von 10 bis 40 cm hat.

2. Abdeckfolie für Spargelfelder nach Anspruch 1, dadurch gekennzeichnet, daß der Abstand der Schweißnähte zueinander und zu den (unteren) Rändern (Folienkanten) oder dem oberen Ende des Umschlags der Folie 5 bis 15 mm beträgt.

3. Abdeckfolie für Spargelfelder nach Anspruch 1 oder 2, dadurch gekennzeichnet, daß der Winkel zwischen den unten senkrechten und den schrägen oberen Schweißnähten 120 bis 135 ° beträgt.

4. Abdeckfolie für Spargelfelder nach einem oder mehreren der Ansprüche 1 bis 3, dadurch gekennzeichnet, daß die untere senkrechte Schweißnaht das 0,1 bis 0,8fache der Umschlagbreite ausmacht.

5. Abdeckfolie für Spargelfelder nach einem oder mehreren der Ansprüche 1 bis 4, dadurch gekennzeichnet, daß die Füllöffnung eine Länge von 15 bis 20 cm hat.

6. Abdeckfolie für Spargelfelder nach einem oder mehreren der Ansprüche 1 bis 5, dadurch gekennzeichnet, daß als Kunststofffolie eine Polyolefinfolie zum Einsatz kommt.
